# EUROPÄISCHE PATENTSCHRIFT

(11) **EP 4 372 714 B1**
(45) Veröffentlichungstag und Bekanntmachung des Hinweises auf die Patenterteilung: **25.03.2026**
(21) Anmeldenummer: 23205807.3
(22) Anmeldetag: 25.10.2023
(51) Int. Cl.: G08G 1/017, G08G 1/09, G08G 1/01, G08G 1/015, G08G 1/04, G08G 1/16, G06V 20/54, G06V 10/82

(54) **VERKEHRSÜBERWACHUNGSSYSTEM UND VERFAHREN ZUM ÜBERWACHEN EINES ABSTANDS**
TRAFFIC MONITORING SYSTEM AND METHOD FOR MONITORING A DISTANCE
SYSTÈME DE SURVEILLANCE DE TRAFIC ET PROCÉDÉ DE SURVEILLANCE D'UNE DISTANCE

(30) Priorität: 11.11.2022 DE 102022129914
(43) Veröffentlichungstag der Anmeldung: 22.05.2024
(73) Patentinhaber: DataCollect Traffic Systems GmbH, 50170 Kerpen (DE)
(72) Erfinder: Lippoldt, Mario, 99084 Erfurt (DE); Ringbeck, Thorsten, 52074 Aachen (DE); Hünning, Felix, 52066 Aachen (DE)
(74) Vertreter: Patentanwälte Bauer Vorberg Kayser

(56) Entgegenhaltungen:
- EP-A1- 3 912 888
- WO-A1-2022/233676
- DE-A1- 102019 005 497
- DE-A1- 102019 107 279

## Beschreibung

Die Erfindung betrifft ein Verkehrsüberwachungssystem und ein Verfahren zum Überwachen eines Seitenabstands, zwischen einem überholenden Fahrzeug und einem überholten Verkehrsteilnehmer, vorzugsweise einem Fahrrad.

Eine wichtige Sicherheitsanforderung im Straßenverkehr ist das Einhalten eines ausreichenden Abstandes zwischen den einzelnen Verkehrsteilnehmern, da ein zu geringer Abstand das Unfallrisiko deutlich erhöhen kann. Bei Überholvorgängen, bei denen ein überholendes Fahrzeug einen überholten Verkehrsteilnehmer überholt, ist ein ausreichender Abstand besonders wichtig. Insbesondere bei Fahrrädern als überholte Verkehrsteilnehmer kann ein zu geringer Abstand zwischen überholendem Fahrzeug und Fahrrad zu schweren Unfällen führen, beispielsweise durch Stürze. Je größer ein überholendes Fahrzeug und je schneller das überholende Fahrzeug während des Überholvorgangs ist, desto stärker und gefährlicher ist der durch das Fahrzeug erzeugte Luftstrom, der ein Fahrrad zur Seite drücken oder in Richtung Fahrbahn ziehen, im schlimmsten Fall sogar umwerfen kann. Daher ist in vielen Ländern ein Mindestabstand vorgeschrieben, den ein Fahrzeug während eines Überholvorgangs zu einem überholten Verkehrsteilnehmer einhalten muss. In Deutschland ist dies beispielsweise in §5 der Straßenverkehrsordnung geregelt. Problematisch ist jedoch, dass ein Überwachen des Einhaltens des Abstands mit automatischen Einrichtungen schwierig ist. Eine Überwachung durch Polizei- oder Ordnungskräfte ist aufwändig und kann meist nur stichprobenartig erfolgen.

Aus der Praxis sind verschiedene Systeme bekannt, die prinzipiell ein Überwachen eines Abstands zwischen einem Fahrrad und einem überholenden Fahrzeug erlauben. So ist beispielsweise auf http://www.elektroniknet.de ein Artikel von Joachim Kroll verfügbar, der auf den 22. August 2018 datiert ist und sich auf eine Abstandsmessung mit einem Arduino-System bezieht. Dabei ist an dem Fahrrad ein Gerät mit Ultraschallsensoren befestigt. Die Ultraschallsensoren messen den Seitenabstand von überholenden Fahrzeugen links und rechts neben dem Fahrrad. Bei Unterschreiten eines Minimalabstands wird mittels Bluetooth eine Warnung an ein verbundenes Smartphone übertragen. Das Smartphone kann die Warnung ausgeben und zu Dokumentationszwecken ein Foto von dem überholenden Fahrzeug aufnehmen.

Ein ähnliches System wird von der Firma Garmin unter der Modellbezeichnung Varia RCT716 vertrieben. Neben der Funktion als Rücklicht erfasst das Gerät mittels eines Radarsensors den Abstand annähender Fahrzeuge. Wenn sich ein Fahrzeug schnell annähert oder mit zu geringem Abstand überholt, erzeugt das Gerät eine Videosequenz, die den Vorgang dokumentiert.

Diese fahrradbasierten Systeme bieten den Vorteil, dass für einen Streitfall oder bei einem Unfall ein gefährliches Verhalten eines überholenden Fahrzeugs dokumentiert werden kann. Dabei können diese Systeme durch das Fahrrad als Bezugspunkt sensortechnisch relativ einfach aufgebaut sein. Nachteilig ist jedoch, dass mit diesen Systemen jeweils nur die Überholvorgänge zu einem dedizierten Fahrrad überwachbar sind. Eine generelle Verkehrsüberwachung, die das Einhalten eines Abstands ähnlich einer allgemeinen Geschwindigkeitskontrolle erlaubt, ist damit jedoch nicht möglich. Zwar wäre ein generelles Ausrollen derartiger Systeme an alle Fahrradfahrenden denkbar. Allerdings ist das weder praktikabel, noch sind die Resultate polizeilich verwertbar. Zudem wäre diese Lösung mit erheblichen Kosten verbunden.

Die DE 10 2019 107 279 A1 offenbart ein System zum Erkennen eines Unterschreitens eines zulässigen Abstands zwischen einem Folgefahrzeug und einem Führungsfahrzeug.

Aus der EP 3 912 888 A1 ist ein Überholassistent entnehmbar, mit dem ein Fahrzeuglenkender vor einem Unterschreiten eines Seitenabstands zu einem überholten Fahrzeug gewarnt werden kann.

Vergleichbare Systeme sind aus DE 10 2019 005 497 A1 und WO 2022/233676 A1 bekannt.

Der Erfindung liegt die Aufgabe zugrunde, ein Verkehrsüberwachungssystem und ein Verfahren bereitzustellen, das ein Überwachen eines Seitenabstands zwischen einem überholenden Fahrzeug und einem überholten Verkehrsteilnehmer erlaubt. Dabei ist erstrebenswert, wenn das Verkehrsüberwachungssystem automatisiert arbeiten kann.

Diese Aufgabe ist durch die Merkmalskombinationen der nebengeordneten Ansprüche gelöst. Weitere Ausgestaltungen der Erfindung offenbaren die jeweiligen Unteransprüche.

Es ist darauf hinzuweisen, dass die in den Ansprüchen einzeln aufgeführten Merkmale in beliebiger, technisch sinnvoller Weise miteinander kombiniert werden können, ohne den Schutzumfang zu verlassen. Der Schutzumfang ist ausschließlich durch die nachstehenden Patentansprüche definiert.

Die Beschreibung charakterisiert und spezifiziert die Erfindung insbesondere im Zusammenhang mit den Figuren zusätzlich.

Es sei ferner angemerkt, dass eine hierin verwendete, zwischen zwei Merkmalen stehende und diese miteinander verknüpfende Konjunktion "und/oder" stets so auszulegen ist, dass in einer ersten Ausgestaltung lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Es ist erkannt worden, dass ein Überwachungssystem zum Überwachen eines Abstands zwischen einem überholenden Fahrzeug und einem überholten Verkehrsteilnehmer als stationäres System ähnlich einem System für eine allgemeine Geschwindigkeitskontrolle ausgestaltet sein kann. Ein derartiges Abstandsüberwachungssystem muss nicht zwingend als bewegtes System mit dem überholten Verkehrsteilnehmer als Bezugssystem aufgebaut sein. Auch wenn durch ein stationäres System die Sensorik und Auswertung komplexer wird, können dadurch erhebliche Vorzüge erreicht werden und es lassen sich weiterreichende Einsatzgebiete erschließen. Insbesondere lässt sich auch eine allgemeine Verkehrsüberwachung erzielen, die die Verkehrsteilnehmer vor einem zu geringen Abstand warnt oder sogar eine Ahndung von Abstandsverstößen ermöglicht.

Ein derartiges System kann ein Messsystem umfassen, das passierende Verkehrsteilnehmer in einem Erfassungsbereich erfasst. Diese passierenden Verkehrsteilnehmer können verschiedenste Fahrzeuge, beispielsweise Personenkraftwagen, Lastkraftwagen, Zweiräder, Fahrräder, Elektroroller und/oder Elektrotretroller, aber auch Fußgänger und/oder sonstige Verkehrsteilnehmer umfassen. Insbesondere können passierende Verkehrsteilnehmer durch überholende Fahrzeuge und/oder überholte Verkehrsteilnehmer gebildet sein. Vereinfachend wirkt dabei, dass sich passierende Verkehrsteilnehmer üblicherweise in einer bekannten Richtung bewegen, nämlich in Fahrtrichtung einer überwachten Straße bzw. eines überwachten Bereichs einer Straße. Dies bedeutet zum einen, dass der Erfassungsbereich gut an eine jeweils zu überwachende Verkehrssituation angepasst werden kann. Zum anderen kann meist relativ klar zwischen einem überholenden und einem überholten Verkehrsteilnehmer unterschieden werden.

Nachfolgend werden derartige passierende Verkehrsteilnehmer auch allgemein als "Objekte in dem Erfassungsbereich" bezeichnet.

Generell kann das "Messsystem" unterschiedlich ausgebildet sein. Von Bedeutung ist lediglich, dass das Messsystem einen Erfassungsbereich aufweist und dass Objekte, die sich durch den Erfassungsbereich bewegen oder sich in dem Erfassungsbereich befinden, erfasst werden können. Ein Objekt kann sich dabei zumindest zeitweise in seiner Gesamtheit im Erfassungsbereich befinden. Allerdings ist auch denkbar, dass ein Objekt lediglich teilweise durch den Erfassungsbereich erfasst wird. In diesem Fall sollte der erfasste Teil zumindest so groß sein, dass eine Identifikation des Objekts möglich ist. Generell sollte das Messsystem zum Erzeugen von Messwerten in der Lage sein, die repräsentativ für Objekte in dem Erfassungsbereich, insbesondere für passierende Verkehrsteilnehmer, sowie deren jeweilige Bewegung sind. Diese Anforderungen sind jedoch von verschiedensten Messsystemen erfüllbar.

Das Messsystem ist dabei "stationär" ausgebildet. Dies bedeutet, dass das Messsystem während des Erzeugens von Messwerten nicht (oder zumindest nicht in signifikantem Ausmaß) bewegt wird. Dies bedeutet nicht zwingend, dass das Messsystem fest mit einem Untergrund verankert ist, beispielsweise über einen einbetonierten Masten oder eine Montage an einer Hauswand, einem Brückenpfeiler oder einer Mauer. Vielmehr kann das Messsystem (oder das Verkehrsüberwachungssystem insgesamt) transportabel ausgebildet sein und für einen Überwachungszweck örtlich unveränderlich - also stationär - aufgestellt werden.

Das Überwachungssystem umfasst ferner eine Auswerteeinheit, eine Bewertungseinheit, einen Komparator und eine Anzeige- und/oder Erfassungseinheit. Die Auswerteeinheit ist kommunizierend mit dem Messsystem verbunden und kann Messwerte des Messsystems über diese Verbindung empfangen. Prinzipiell ist auch denkbar, dass Messsystem und Auswerteeinheit als integrale Bestandteile ausgebildet sind, d.h. die beiden Komponente lediglich in ihrer Funktion jedoch nicht als einzelne Einheiten unterscheidbar sind. Die Auswerteeinheit ist dazu ausgebildet, in den Messwerten Objekte in dem Erfassungsbereich zu identifizieren. Dabei ist es Hauptaufgabe der Auswerteeinheit, Objekte jeweils als überholendes Fahrzeug und/oder überholtes Fahrzeug und/oder als sonstiges Objekt zu identifizieren. Als identifizierte Objekte in diesem Sinne kann alles verstanden werden, was nicht als feststehendes Objekt bezeichnet werden kann. Ein derartiges feststehendes Objekt kann beispielsweise die Straße selbst, ein Seitenbegrenzungspfosten, eine Ampel, eine Straßenlaterne, ein geparktes Auto, ein Baum und/oder dergleichen umfassen. Die Auswerteeinheit kann diese feststehenden Objekte auch selbst erkennen, indem über eine gewisse Zeitspanne (beispielsweise eine oder fünf Minute) hinweg nicht veränderliche Messwerte als stehende Objekte ausgemacht und für die weitere Identifikation ausgeschlossen werden.

Wenn sich lediglich ein Objekt durch den Erfassungsbereich bewegt, kann die weitere Bearbeitung prinzipiell abgebrochen werden. Es ist aber auch denkbar, dass dieses einzelne Objekt als überholter Verkehrsteilnehmer identifiziert wird, da ein überholendes Fahrzeug auch zu einem späteren Zeitpunkt in den Erfassungsbereich treten kann. Das Identifizieren eines überholenden Fahrzeugs setzt voraus, dass ein überholter Verkehrsteilnehmer vorhanden ist, da ohne überholten Verkehrsteilnehmer kein Überholvorgang möglich ist. Dabei befinden sich das überholende Fahrzeug und der überholte Verkehrsteilnehmer idealerweise gleichzeitig im Erfassungsbereich. Allerdings kann der überholte Verkehrsteilnehmer auch kurz vor dem Erfassen des überholenden Fahrzeugs den Erfassungsbereich verlassen haben oder kurz nach dem Verlassen des überholenden Fahrzeugs in den Erfassungsbereich treten. Auch dies kann prinzipiell noch als Überholvorgang gewertet und ausgewertet werden. Dabei dürfte das "kurz" von der Geschwindigkeit der Objekte abhängen. Meist dürfte sich "kurz" im Bereich weniger Sekunden bewegen, für die Sicherheit einer Extrapolation der Bewegungen der Objekte eher im Bereich von maximal einer Sekunde oder darunter.

Prinzipiell kann ein "überholendes Fahrzeug" durch verschiedenste Fahrzeuge gebildet sein. Denn Regelungen für das Einhalten eines Minimalabstandes sind vielfach nicht auf bestimmte Fahrzeuge oder Fahrzeugtypen beschränkt. So muss prinzipiell auch ein Fahrrad, das ein anderes Fahrrad überholt einen Minimalabstand einhalten. Da eine maßgebliche Gefahr jedoch von größeren Fahrzeugen ausgeht, ist in einer Ausgestaltung als überholendes Fahrzeug insbesondere ein Kraftfahrzeug gemeint, also ein mit einem Motor angetriebenes, nicht an Schienen gebundenes Fahrzeug. Das kann ein Personenkraftwagen, ein Lastkraftwagen, eine Zugmaschine, ein Motorrad, ein motorisiertes Lastenfahrrad, ein Wohnmobil, eine Landmaschine oder dergleichen umfassen. Eine Eigenschaft eines überholenden Fahrzeugs ist, dass es sich in eine annähernd gleiche Richtung bewegt wie ein überholter Verkehrsteilnehmer, aber eine höhere Geschwindigkeit aufweist als der überholte Verkehrsteilnehmer. Dabei befindet sich das überholende Fahrzeug - bei Rechtsverkehr - üblicherweise links neben dem überholten Verkehrsteilnehmer. In Ausnahmesituationen kann ein Überholvorgang auch rechts erfolgen, beispielsweise an Abbiegespuren. Bei Linksverkehr ist dies entsprechend umgekehrt.

Ein "überholter Verkehrsteilnehmer" kann jeder Verkehrsteilnehmer sein, der durch ein überholendes Fahrzeug überholt werden kann, wobei üblicherweise davon ausgegangen wird, dass sich sowohl das überholende Fahrzeug als auch der überholte Verkehrsteilnehmer in die annähernd gleiche Richtung bewegen. Ein überholter Verkehrsteilnehmer kann prinzipiell auch ein Fußgänger sein. In einer Ausgestaltung sind damit nicht Schienen gebundene Fahrzeuge gemeint. Dabei kann das Fahrzeug sowohl motorisch als auch durch Muskelkraft angetrieben sein. In einer Ausgestaltung sind mit einem "überholten Verkehrsteilnehmer" einspurige Fahrzeuge gemeint, insbesondere Fahrräder, E-Bikes oder Pedelecs. Bei derartigen Verkehrsteilnehmern ist ein zu geringer Abstand besonders gefährlich.

Die Bewertungseinheit ist dazu ausgebildet, Entfernungen zwischen Objekten in dem Erfassungsbereich zu ermitteln. Zusätzlich kann die Bewertungseinheit dazu ausgebildet sein, jeweils Geschwindigkeit und/oder Größe (vorzugsweise Breite und/oder Höhe) von Objekten in dem Erfassungsbereich zu ermitteln. Dazu kann die Bewertungseinheit kommunizierend mit dem Messsystem verbunden sein und die Messwerte des Messsystems empfangen. Dabei können Entfernungen zwischen sämtlichen Objekten innerhalb des Erfassungsbereichs ermittelt werden, also unabhängig davon, ob das Objekt ein feststehendes Objekt, ein überholendes Fahrzeug, ein überholter Verkehrsteilnehmer oder ein sonstiges Objekt ist. Zur Steigerung der Effizienz des Überwachungssystems kann die Bewertungseinheit Informationen über die identifizierten Objekte bei der Ermittlung von Entfernungen nutzen. Dazu kann die Bewertungseinheit mit der Auswerteeinheit kommunizierend verbunden sein und Informationen über identifizierte Objekte erhalten. Auf diese Weise kann das Ermitteln von Entfernungen auf die relevanten Objekte reduziert werden, nämlich auf überholende Fahrzeuge und überholte Verkehrsteilnehmer, die sich zur gleichen Zeitspanne und/oder innerhalb eines vordefinierten Zeitfensters im Erfassungsbereich befinden. Letzteres betrifft den zuvor angesprochenen Fall, dass sich das überholende Fahrzeug und der überholte Verkehrsteilnehmer zwar nicht zur gleichen Zeit in dem Erfassungsbereich befinden, das überholende Fahrzeug oder der überholte Verkehrsteilnehmer aber kurz davor den Erfassungsbereich betritt oder verlässt. Entsprechendes gilt, wenn optional die Geschwindigkeit und/oder Größe erfasst wird.

Prinzipiell kann eine ermittelte Entfernung verschiedenste Entfernungen zwischen jeweils zwei Objekten betreffen. In einer Ausgestaltung wird unter "Entfernung" ein Abstand verstanden, d.h. zwischen Punkten des überholenden Fahrzeugs und des überholten Verkehrsteilnehmers, die eine minimalen Entfernung zueinander haben. Da mittels der vorliegenden Offenbarung der Abstand zwischen überholendem Fahrzeug und überholtem Verkehrsteilnehmer während eines Überholvorgangs überwacht werden soll, ist prinzipiell der Zeitpunkt des Überholvorgangs besonders interessant, an dem sich das überholende Fahrzeug und der überholte Verkehrsteilnehmer besonders nahe kommen und/oder an dem die größte Gefahr für den überholten Verkehrsteilnehmer besteht. Daher ist die ermittelte Entfernung in einer Ausgestaltung ein Seitenabstand. Sofern der Ort des geringsten Abstands vor oder nach dem Erfassungsbereich des Messsystems liegen sollte, kann der geringste Abstand auch - in gewissen Grenzen - extrapoliert werden.

Der Komparator ist dazu ausgebildet, durch die Bewertungseinheit ermittelte Entfernungen zwischen Objekten in dem Erfassungsbereich mit einem Minimalabstand zu vergleichen und basierend auf einem Ergebnis dieses Vergleichs ein Triggerereignis zu erzeugen und auszugeben. Dazu ist der Komparator kommunizierend mit der Bewertungseinheit verbunden und kann dort ermittelte Entfernungswerte empfangen. Zusätzlich ist ein Minimalwert in dem Komparator eingebbar, beispielsweise aus einem Speicher. In einer Ausgestaltung kann der Komparator die Entfernungen empfangen, mit dem Minimalwert vergleichen und bei Unterschreiten des Minimalwerts durch die Entfernung ein Triggerereignis ausgeben. Es ist auch denkbar, dass der Komparator die Entfernungswerte mit mehreren Grenzwerten vergleicht und unterschiedliche Triggerereignisse ausgibt. So ist denkbar, dass ein erstes Triggerereignis signalisiert, dass ein ausreichend großer Abstand erkannt worden ist. In diesem Fall kann der Komparator eine Entfernung mit dem Minimalwert vergleichen und bei einer ausreichend großen Differenz zwischen Entfernung und Minimalwert ein Triggerereignis "Abstand OK" erzeugen und ausgeben. Dieser Vergleich kann auch durch Nutzung eines zweiten Grenzwertes erfolgen. Ein zweites Triggerereignis kann signalisieren, dass der Abstand zwar nicht zu gering, ein größerer Abstand zugunsten der Sicherheit aber dennoch anzuraten ist. In diesem Fall kann der Komparator eine Entfernung mit dem Minimalwert vergleichen und bei einer Entfernung größer als den Minimalwert, aber dennoch mit einer geringen Differenz zwischen Entfernung und Minimalwert ein Triggerereignis "Abstand grenzwertig" erzeugen und ausgeben. Dieser Vergleich kann auch durch Nutzung eines dritten Grenzwertes erfolgen. Ein drittes Triggerereignis kann signalisieren, dass der Minimalabstand unterschritten ist. In diesem Fall würde der Komparator eine Entfernung mit dem Minimalwert vergleichen und bei Unterschreiten des Minimalwerts durch die Entfernung ein Triggerereignis "Abstand zu gering" erzeugen und ausgeben. Dabei kann das Triggerereignis zusätzlich den ermittelten Abstand enthalten. Diese nicht abschließend und nicht einschränkend zu verstehenden Beispiele von Komparatoren und erzeugten Triggerereignissen verdeutlichen, wie flexibel dieses Konzept ausgestaltet sein kann.

Ein "Triggerereignis" ist ganz allgemein eine Nachricht, die ein Resultat des Vergleichs durch den Komparator repräsentiert und gleichzeitig mit einer auszulösenden Aktion verknüpft ist. Dabei kann lediglich eine einfache Aktivierungsinformation in dem Triggerereignis enthalten sein. Es können aber auch weiterreichende Informationen enthalten sein, wie beispielsweise einen Zeitstempel, einen erfassten Abstand, einen genutzten Schwellenwert oder eine Messdauer. Das Triggerereignis kann auf verschiedenste Weise ausgebildet sein. Insbesondere kann es als analoges oder digitales Signal oder analoge oder digitale Signalfolge ausgebildet sein. In einer Ausgestaltung kann ein Triggerereignis ein Spannungspegel sein, der bei Aktivieren eines Triggerereignisses einen ersten Pegel und andernfalls einen zweiten Pegel annimmt, wobei die beiden Pegel eindeutig voneinander unterscheidbar sein sollten. Auf diese Weise kann eine besonders schnelle Übertragung des Triggerereignisses erreicht werden. In einer anderen Ausgestaltung kann ein Triggerereignis durch ein oder mehrere Datenpaket/e gebildet sein, das/die nach dem Internet-Protocol oder einem anderen digitalen Übertragungsprotokoll aufgebaut ist/sind. Auf diese Weise kann eine Übertragung über verschiedenste standardisierte Kommunikationsschnittstellen ermöglicht oder vereinfacht werden und es lassen sich relativ viele Informationen mit einem derartigen Triggerereignis übertragen. Diese nicht als abschließend oder beschränkend zu verstehende, kurze Aufzählung zeigt, wie flexibel ein Triggerereignis aufgebaut und ausgebildet sein kann.

Die Anzeige- und/oder Erfassungseinheit kann zum Ausführen einer Aktion basierend auf dem Triggerereignis ausgebildet sein. Dazu ist die Anzeige- und/oder Erfassungseinheit kommunizierend mit dem Komparator verbunden und kann auf diesem Wege ein Triggerereignis empfangen. In einer Ausgestaltung kann die Aktion ein Erfassen des überholenden Fahrzeugs durch eine Kamera umfassen. In einer anderen Ausgestaltung kann die Aktion die Ausgabe einer Warnung an das überholende Fahrzeug, beispielsweise durch ein Lichtzeichen, umfassen. Mit den zuvor genannten Beispielen von Triggerereignissen kann bei dem Triggerereignis "Abstand zu gering" mittels der Kamera ein Bild oder ein Video von dem überholenden Fahrzeug aufgenommen werden. Zusätzlich oder alternativ kann dem überholenden Fahrzeug ein Lichtzeichen, beispielsweise ein rotes Symbolbild, angezeigt werden. Wenn ein Triggerereignis "Abstand grenzwertig" empfangen wird, kann die Anzeige- und/oder Erfassungseinheit dem überholenden Fahrzeug eine entsprechende Warnung anzeigen, wodurch der Fahrzeugführende erkennt, dass der Abstand erhöht werden sollte. Denkbar wäre hierbei beispielsweise ein orangefarbenes Symbolbild. Auf diese Weise können Fahrzeugführende bei zukünftigen Überholvorgängen die Abstände zu überholten Verkehrsteilnehmern besser einschätzen. Wenn ein Triggerereignis "Abstand OK" empfangen wird, kann dieses Triggerereignis in der Aktion "ignorieren" münden. Zur Motivation von Fahrzeugführenden kann aber auch eine positive Rückmeldung ausgegeben werden, beispielsweise durch ein grünes Lichtzeichen oder ein Smilie oder einen Daumen-hoch oder auf sonstige Weise. Diese Beispiele sind weder abschließend noch beschränkend zu verstehen und sollen lediglich die Funktion der Anzeige- und/oder Erfassungseinheit verdeutlichen.

Dabei können die einzelnen Komponenten des Verkehrsüberwachungssystem, beispielsweise das Messsystem, die Auswerteeinheit, die Bewertungseinheit, der Komparator und die Anzeige- und/oder Erfassungseinheit, auf verschiedenste Weise ausgebildet und/oder implementiert sein, solange die vorgenannten Eigenschaften oder zumindest einzelne davon verwirklichbar sind. In einer Ausgestaltung können die Komponenten des Verkehrsüberwachungssystem vollständig durch Hardware implementiert sein. In einer anderen Ausgestaltung sind die Komponenten durch eine Kombination aus Hardware und Software implementiert. Die Hardware kann dabei Sensoren (beispielsweise Radarsensor, Kamera, Infrarotkamera, ToF-Sensor, LIDAR, etc.), Analog-Digital-Wandler, Filter (beispielsweise Hochpass-, Tiefpass-, Bandpassfilter), einen oder mehrere Prozessor/en (beispielsweise Mikrocontroller, digitaler Signalprozessor oder ASIC (Application Specific Integrated Circuit)) und/oder programmierbare Logikschaltung (beispielsweise FPGA (Field Programmable Gate Array) oder CPLD (Complex Programmable Logic Device)) umfassen. Ferner kann ein oder mehrere Speicher vorhanden sein, beispielsweise RAM (Random Access Memory), ROM (Read Only Memory), Flash-Speicher, Festplatte/n oder SSD (Solid State Disk), auf den andere Hardware-Komponenten zugreifen können. Software kann die jeweiligen Komponenten des Verkehrsüberwachungssystems und deren Interaktion steuern.

In einer Ausgestaltung ist die Auswerteeinheit dazu ausgebildet, Objekte basierend auf deren Dimension und/oder deren Position in dem Erfassungsbereich zu identifizieren. Insbesondere bei der Unterscheidung von überholenden Kraftfahrzeugen und überholten Fahrrädern kann auf diese Weise besonders einfach eine Identifikation von Objekten vorgenommen werden. Dabei kommt zugute, dass Kraftfahrzeuge meist eine recht ausgeprägte Breite aufweisen. Meist sind diese mindestens 1,60 Meter breit, üblicherweise sogar deutlich breiter. Fahrräder als überholte Verkehrsteilnehmer sind hingegen relativ schmal, beispielsweise 60 bis 80 Zentimeter, und relativ hoch, beispielsweise 1,5 Meter bis 2,0 Meter. Dadurch kann durch die Dimension eine Unterscheidung erfolgen. Zudem fahren Fahrräder üblicherweise nahe des Fahrbahnrands, während überholende Fahrzeuge üblicherweise links davon überholen. Insofern kann durch die Position der Verkehrsteilnehmer das überholende Fahrzeug und der überholte Verkehrsteilnehmer auf einfache Weise identifiziert werden.

In einer Ausgestaltung basiert die Auswerteeinheit auf einem KI (Künstliche Intelligenz)-Ansatz und weist vorzugsweise ein neuronales Netzwerk zum Identifizieren von Objekten in dem Erfassungsbereich auf. Auf diese Weise lassen sich die Objekte besonders zuverlässig identifizieren. Künstliche Intelligenz basiert auf eingegebenem Vorwissen und kann dadurch besonders zuverlässig Identifikationen durchführen. So kann beispielsweise ein neuronales Netzwerk mit einer Vielzahl von Messwerten eines Messsystems trainiert werden, bei denen die erfassten Objekte bekannt sind, beispielsweise bekannte überholende Fahrzeuge und bekannte überholte Verkehrsteilnehmer. Dabei kann es ausreichend sein, wenn die Kategorien recht grob gewählt sind, beispielsweise die Kategorien Kraftfahrzeug und Fahrrad. Für das Trainieren des Neuronalen Netzwerks kann eine weitere Detaillierung vorteilhaft sein, beispielsweise in die Kategorien PKW, LKW, Motorrad und Fahrrad, um lediglich einige denkbare Beispiele zu nennen.

In einer Ausgestaltung umfasst das Messsystem eine Kamera, dessen Bild durch die Auswerteeinheit beim Identifizieren von Objekten in dem Erfassungsbereich nutzbar ist. Für die Identifikation der Objekte können prinzipiell die Messwerte selbst genutzt werden. Es kann sich jedoch auch anbieten, eine separate Kamera vorzusehen, deren Bilder für eine Identifikation von Objekten genutzt werden. Diese Kamera kann eine Infrarotkamera, eine RGB-Kamera, eine Graustufenkamera oder dergleichen umfassen. Dies erleichtert das Nutzen aus der Praxis bekannter Techniken, wie beispielsweise das Nutzen von Bilderkennungsalgorithmen. Ergänzend könnten die Bilder und/oder Videos dieser Kamera zur Dokumentation eines Überholvorgangs genutzt werden.

In einer Ausgestaltung umfassen die Messwerte des Messsystems Informationen über Entfernungen zwischen dem Messsystem und erkannten Objekten in dem Erfassungsbereich und ist die Bewertungseinheit dazu ausgebildet, die Entfernungen zwischen Objekten in dem Erfassungsbereich basierend auf Entfernungen zwischen dem Messsystem und erkannten Objekten in dem Erfassungsbereich zu ermitteln. Durch Erfassen von Objekten und deren Entfernung von dem Messsystem kann die räumliche Einordnung der Objekte verbessert werden. Durch Nutzen dieser Messwerte bei der Ermittlung der Entfernungen zwischen den Objekten kann die Qualität der Entfernungsermittlung gesteigert werden.

In einer Weiterbildung ist die Bewertungseinheit dazu ausgebildet, die Entfernungen zwischen Objekten in dem Erfassungsbereich als Differenz von Entfernungen zwischen dem Messsystem und erkannten Objekten in dem Erfassungsbereich zu ermitteln. Als Differenz kann hier meist eine Vektordifferenz verstanden werden. Auf diese Weise vereinfacht sich die Abstandsermittlung noch weiter und reduziert sich auf eine vergleichsweise einfache Berechnung von Kanten eines Dreiecks.

In einer Ausgestaltung ist die Bewertungseinheit beim Ermitteln von Entfernungen zwischen Objekten in dem Erfassungsbereich dazu ausgebildet, Bezugspunkte und/oder Bezugslinien in Messwerten des Messsystem zu nutzen. Hierbei kann ausgenutzt werden, dass sich in dem Erfassungsbereich nicht nur überholende Fahrzeuge und überholte Verkehrsteilnehmer befinden. Vielmehr werden insbesondere feststehende Objekte in dem Erfassungsbereich sein. Diese feststehenden Objekte können beispielsweise Linien auf der Fahrbahn, Masten am Fahrbahnrand, Fahrbahnbegrenzungspfosten oder dergleichen umfassen und haben einen bekannten und unveränderlichen Abstand zueinander. Diese Bezugspunkte und/oder Bezugslinien lassen sich beim Ermitteln von Entfernungen nutzen. Eine Linie auf der Fahrbahn kann beispielsweise durch Begrenzungslinien eines Fahrradweges gebildet sein. Derartige Bezugspunkte oder Bezugslinien können aber auch explizit für die Abstandüberwachung angebracht, beispielsweise auf die Fahrbahn gemalt, worden sein. Auf diese Weise lassen sich Entfernungen mit einfachen Mitteln ermitteln.

In einer Ausgestaltung ist die Bewertungseinheit beim Ermitteln von Entfernungen zwischen Objekten in dem Erfassungsbereich dazu ausgebildet, einen zeitlichen Verlauf innerhalb der Messwerte des Messsystem zu nutzen. Auf diese Weise kann die Abstandsermittlung verbessert werden. Der zeitliche Verlauf kann beispielsweise die Fahrwege des überholenden Fahrzeugs und/oder des überholten Verkehrsteilnehmers nachvollziehbar machen und/oder extrapolieren. Ein Beispiel für ein Nachvollziehen eines Fahrwegs ist, wenn der überholte Verkehrsteilnehmer in dem Erfassungsbereich ohne ersichtlichen Grund den Abstand zu dem überholenden Fahrzeug reduziert hat. Ein Beispiel für eine Extrapolation ist, wenn der eigentliche Überholvorgang unmittelbar vor oder nach dem Erfassungsbereich erfolgt. Da sich die Fahrwege von Fahrzeugen nicht abrupt ändern können, kann der Abstand bei dem eigentlichen Überholvorgang sehr gut abgeschätzt werden.

In einer Ausgestaltung umfasst das Messsystem ein Radarsystem, vorzugsweise ein FMCW - Frequency Modulated Continous Wave - Radar, eine ToF - Time of Flight - Kamera, eine Stereokamera oder ein LIDAR - Laser Imaging Detection and Ranging - System. Ein Radarsystem ermöglicht gut auflösende Abstandswerte bei gleichzeitig günstiger Sensorik. Die Weiterbildung des Radarsystems durch ein FMCW-Radar, bei dem die Sendefrequenz periodisch zeitlich verändert wird, ermöglicht eine präzise Abstandsmessung bei einer zusätzlichen Geschwindigkeitsmessung. Eine ToF-Kamera ist ein 3D-Kamerasystem, bei dem eine erfasste Szene mit Lichtpulsen beleuchtet und der zeitliche Abstand bis zum Erfassen deren Reflexionen an einem Objekt erfasst und ausgewertet werden. Damit können zuverlässige Informationen über die dreidimensionale Position eines Objekts erfasst werden. Bei einem LIDAR-System scannt ein Laserstrahl einen Erfassungsbereich ab. Die Laufzeit zurückreflektierter Anteile des Laserstrahls werden erfasst und ausgewertet. Auf diese Weise lassen sich sehr präzise Entfernungsinformationen gewinnen. Durch eine Stereokamera kann ein relativ günstiges Messsystem aufgebaut werden.

In einer Ausgestaltung umfasst das Messsystem ein Hybridsystem, das mehrere Sensoren miteinander kombiniert. In einer Weiterbildung umfasst dieses Hybridsystem neben einer Kamera (beispielsweise eine Infrarotkamera oder eine RGB-Kamera) zusätzlich einen weiteren Sensor, vorzugsweise ein Radarsystem, eine ToF-Kamera, ein LIDAR-System oder dergleichen. Dabei könnte ein Kamerabild der Kamera dazu genutzt werden, um die Erfassung des weiteren Sensors zu steuern. Wenn beispielsweise das Kamerabild zum Erkennen eines überholenden Fahrzeugs und eines überholten Verkehrsteilnehmers genutzt wird, kann es für eine Abstandsbestimmung ausreichend sein, lediglich den Teil des prinzipiell möglichen Erfassungsbereichs genauer zu erfassen, in dem sich der Überholvorgang abspielt. Auf diese Weise kann die Erfassung beschleunigt und eine Erzeugung ohnehin nicht benötigter Messwerte vermieden werden.

In einer Ausgestaltung ist das Messsystem derart relativ zu einer überwachten Fahrbahn angeordnet, dass zumindest eine Ebene innerhalb des Erfassungsbereichs des Messsystems senkrecht zu der Fahrbahn angeordnet ist. Dies kann beispielsweise dadurch erreicht werden, dass das Messsystem an einem Masten an erhöhter Position angeordnet ist und einen nach unten, in Richtung Fahrbahn gerichteten Erfassungsbereich aufspannt. Eine Ebene innerhalb des Erfassungsbereichs kann dann senkrecht zu der Fahrbahn angeordnet sein. "Senkrecht" kann sich beispielsweise auf die Oberfläche der Fahrbahn und/oder den Fahrbahnverlauf (beispielsweise gekennzeichnet durch Fahrbahnmarkierungen) beziehen. Dabei kann die Ebene in dem vorgenannten Beispiel auch den Masten mit enthalten. Auf diese Weise kann sich die Entfernungsermittlung vereinfachen.

In einer Ausgestaltung sind das Messsystem, die Auswerteeinheit, die Bewertungseinheit, der Komparator und die Anzeige- und/oder Erfassungseinheit in einem gemeinsamen Gehäuse angeordnet. Auf diese Weise entsteht ein Verkehrsüberwachungssystem, das ähnlich einer Geschwindigkeitsanzeigetafel oder einem Geschwindigkeitsüberwachungsgerät arbeitet.

In einer Ausgestaltung sind zumindest das Messsystem und die Anzeige- und/oder Erfassungseinheit räumlich voneinander getrennt, wobei die Anzeige- und/oder Erfassungseinheit vorzugsweise kabellos das Triggerereignis empfängt. Durch eine derartige räumliche Trennung kann der Erfassungsbereich und die Position der Anzeige- und/oder Erfassungseinheit auf den jeweiligen Zweck hin optimiert werden. In einer Weiterbildung sind die Auswerteeinheit, Bewertungseinheit und/oder der Komparator bei dem Messsystem oder in dem Gehäuse des Messsystem angeordnet, wodurch ein Übertragen von Daten zwischen Geräten auf ein Minimum reduziert werden kann. Das kabellose Übertragen von Triggerereignissen erleichtert die Installation des Verkehrsüberwachungssystems, insbesondere bei mobilen Systemen.

In einer Ausgestaltung sind die Auswerteeinheit, die Bewertungseinheit und/oder der Komparator entfernt von dem Messsystems und/oder der Anzeige- und/oder Erfassungseinheit angeordnet. Auf diese Weise können die Auswerteeinheit, die Bewertungseinheit und/oder der Komparator beispielsweise in ein Cloud-System ausgelagert werden. Je nach ausgelagerter Funktion kann eine ausreichend geeignete Kommunikationsverbindung, beispielsweise hinsichtlich Übertragungsgeschwindigkeit, Bandbreite und Latenz, erforderlich sein.

In einer Ausgestaltung ist die Anzeige- und/oder Erfassungseinheit zum Ausgeben von Lichtzeichen basierend auf dem Triggerereignis ausgebildet, die vorzugsweise ein Unterschreiten des Minimalabstands und/oder ein Einhalten des Minimalabstands signalisieren. Das Ausgeben eines Lichtzeichens ermöglicht ein einfaches und problemlos wahrnehmbares Darstellen des Ergebnisses an den Fahrzeuglenkenden des überholenden Fahrzeugs sowie den überholten Verkehrsteilnehmer. Dabei bietet es sich an, wenn die Bedeutung des Lichtzeichens für alle Beteiligten einfach wahrnehmbar ist. Dies kann beispielsweise durch ein Piktogramm erreicht werden, das beispielsweise ein symbolisiertes Kfz auf der linken Seite, ein symbolisiertes Fahrrad auf der rechten Seite und einen Doppelpfeil zwischen den beiden enthält. Ein Anzeigen des Unterschreitens des Minimalabstands erleichtert einem Fahrzeuglenkenden eines überholenden Fahrzeugs das Einschätzen des Abstands bei zukünftigen Überholvorgängen und erinnert den Fahrzeuglenkenden an die Abstandsregeln. Ferner kann der Abstand dann eventuell noch vergrößert werden, um eine Gefährdung des überholten Verkehrsteilnehmers zu reduzieren. Ein Anzeigen des Einhaltens des Minimalabstands gibt einem Fahrzeuglenkenden eines überholenden Fahrzeugs eine positive Rückmeldung über das Überholverhalten.

In einer Ausgestaltung ist die Anzeige- und/oder Erfassungseinheit zum Erzeugen eines Fotos und/oder eines Videos basierend auf dem Triggerereignis ausgebildet, das einen Überholvorgang des überholten Verkehrsteilnehmers durch das überholende Fahrzeug dokumentiert. Auf diese Weise lassen sich Abstandsverstöße dokumentieren und gegebenenfalls ahnden.

In einer Ausgestaltung umfasst das Verkehrsüberwachungssystem zusätzlich eine Protokolliereinheit, wobei die Protokolliereinheit kommunizierend mit dem Messsystem, der Auswerteeinheit, der Bewertungseinheit und/oder dem Komparator verbunden ist, wobei die Protokolliereinheit dazu ausgebildet ist, durch das Verkehrsüberwachungssystem erfasste Ereignisse abzuspeichern und/oder auszuwerten, wobei erfasste Ereignisse vorzugsweise vorhandene Objekte in dem Erfassungsbereich, erkannte Überholvorgänge, ermittelte Entfernungen, erzeugte Bilder und/oder erzeugte Triggerereignisse umfassen. Auf diese Weise lässt sich eine überwachte Stelle besser bewerten. So kann die Protokolleinheit beispielsweise zur Erzeugung einer Sicherheitsstatistik ausgebildet sein, die die Anzahl passierender Fahrzeuge und/oder Verkehrsteilnehmer in Relation zu der Anzahl von Überholvorgängen und/oder der Anzahl von Abstandsverstößen stellt. Dabei kann die Protokolleinheit in einer Cloud implementiert sein, was die Datenhaltung und Verfügbarkeit gewonnener Informationen verbessern kann.

In einer Ausgestaltung umfasst das Verkehrsüberwachungssystem eine Kommunikationseinheit, vorzugsweise für eine Kommunikation über ein Weitbereichsnetzwerk, wobei die Kommunikationseinheit zum Kommunizieren von Triggerereignissen und/oder aufgenommenen Fotos und/oder aufgenommenen Videos und/oder Messwerten an eine Leitstelle und/oder eine Protokolliereinheit ausgebildet ist. Mittels einer Kommunikationseinheit lässt sich eine Kommunikation mit dem Verkehrsüberwachungssystem mit einer Außenwelt erreichen. Dabei kann eine Kommunikation von außen mit dem Verkehrsüberwachungssystem vorgenommen werden, um beispielsweise das Verkehrsüberwachungssystem zu parametrieren oder mit Software-Updates zu versorgen. In umgekehrte Richtung kann die Kommunikationseinheit dazu genutzt werden, um verschiedene gewonnene Informationen und/oder Statusinformationen nach außen an eine Leitstelle zu kommunizieren. Die verschiedenen gewonnenen Informationen können dabei erzeugte Triggerereignisse, aufgenommene Fotos/Videos und/oder erfasste Messwerte umfassen. Das Kommunizieren von Triggerereignissen ermöglicht eine Aussage darüber, wie massiv es zu Abstandsverstößen kommt. Das Kommunizieren von Fotos/Videos kann für eine Ahndung der Abstandsverstöße genutzt werden. Das Kommunizieren erzeugter Messwerte lässt die Qualität der Messungen beurteilen. Eine "Leitstelle" kann dabei durch verschiedenste Einrichtungen gebildet sein, bei denen die Informationen empfangen und weiter ausgewertet werden. Die Protokolliereinheit kann gemäß der vorgenannten Ausgestaltung ausgebildet sein.

Weitere Merkmale und Vorteile der Erfindung ergeben sich aus der folgenden Beschreibung nicht einschränkend zu verstehender Ausführungsbeispiele der Erfindung, die im Folgenden unter Bezugnahme auf die Zeichnung näher erläutert wird. In dieser Zeichnung zeigen schematisch:
- Fig. 1: ein Blockschaltbild eines Ausführungsbeispiels eines Verkehrsüberwachungssystem gemäß der vorliegenden Offenbarung und
- Fig. 2: eine Schrägansicht eines Einsatzszenariums eines Ausführungsbeispiels eines Verkehrsüberwachungssystem gemäß der vorliegenden Offenbarung.

In den unterschiedlichen Figuren sind hinsichtlich ihrer Funktion gleichwertige Teile stets mit denselben Bezugszeichen versehen, so dass diese in der Regel auch nur einmal beschrieben werden.

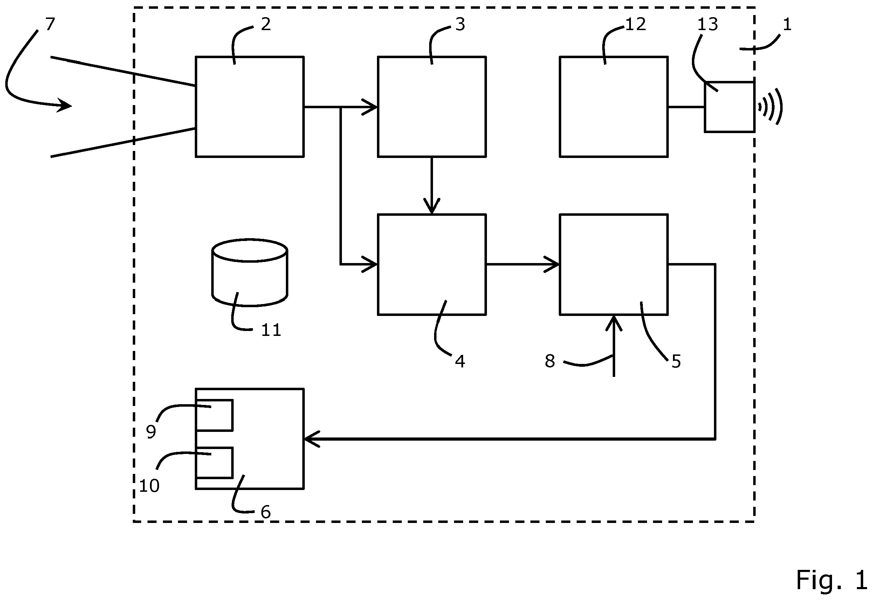

Fig. 1 zeigt ein Blockschaltbild eines Ausführungsbeispiels eines Verkehrsüberwachungssystems gemäß der vorliegenden Offenbarung. Das Verkehrsüberwachungssystem 1 umfasst ein Messsystem 2, eine Auswerteeinheit 3, eine Bewertungseinheit 4, einen Komparator 5 und eine Anzeige- und/oder Erfassungseinheit 6. Das Messsystem 2 weist einen Erfassungsbereich 7 auf, innerhalb dessen das Messsystem 2 passierende Objekte (in Fig. 1 nicht dargestellt), insbesondere überholende Fahrzeuge und/oder überholte Verkehrsteilnehmer (in Fig. 1 nicht dargestellt) erfassen kann. Von den passierenden Objekten gewonnene Messwerte werden an die Auswerteeinheit 3 und die Bewertungseinheit 4 weitergegeben. Die Auswerteeinheit 3 identifiziert in den erhaltenen Messwerten überholende Fahrzeuge und/oder überholte Verkehrsteilnehmer. Dabei kann die Auswerteeinheit 3 einen KI-Ansatz nutzen, beispielsweise ein neuronales Netzwerk. Die Bewertungseinheit 4 nutzt die Messwerte und die durch die Auswerteeinheit 3 gewonnenen Identifikationsinformationen, um Abstände zwischen einzelnen Objekten im Erfassungsbereich 7, insbesondere überholenden Fahrzeugen und überholten Verkehrsteilnehmer zu ermitteln. Die ermittelten Abstände werden an den Komparator 5 weitergegeben, der diese mit einem eingegebenen Minimalabstand 8 vergleicht. Mit dem derart erzeugten Vergleichsergebnis wird ein Triggerereignis erzeugt, das an die Anzeige- und/oder Erfassungseinheit 6 ausgegeben wird. Die Anzeige- und/oder Erfassungseinheit 6 empfängt das Triggerereignis und führt die damit verknüpfte Aktion aus, beispielsweise das Ausgeben eines Hinweises mittels eines Lichtzeichens 9 und/oder das Erzeugen eines Fotos mittels einer Kamera 10 zur Dokumentation des Überholvorgangs. Das Lichtzeichen 9 und die Kamera 10 können dabei Bestandteil der Anzeige- und/oder Erfassungseinheit 6 sein.

Das Verkehrsüberwachungssystem 1 kann zusätzlich einen Speicher 11 umfassen, in dem beispielsweise erfasste Messwerte, erzeugte Triggerereignisse und/oder erzeugte Fotos/Videos abgespeichert werden können. Zusätzlich kann ein Zeitgeber (nicht eingezeichnet) vorhanden sein, der zum Erzeugen eines Zeitstempels für in dem Speicher 11 abgespeicherte Informationen genutzt wird. Das Verkehrsüberwachungssystem 1 kann zudem eine Steuereinheit 12 umfassen, die Funktionen des Verkehrsüberwachungssystems 1 steuert. Darüber hinaus kann eine Kommunikationseinheit 13 vorhanden sein, die eine Kommunikation nach außen, vorzugsweise eine funkbasierte Kommunikation, erlaubt und vorzugsweise eine Kommunikation mit einem Weitbereichsnetzwerk, beispielsweise einem Mobilfunknetzwerk, ermöglicht.

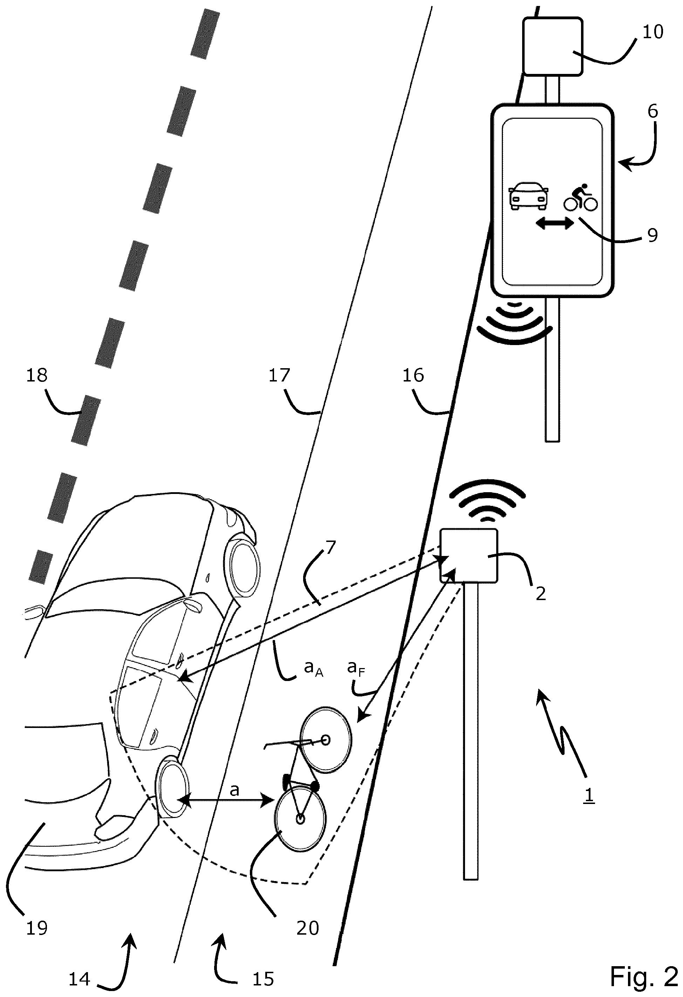

Fig. 2 zeigt ein Einsatzszenarium eines derartigen Verkehrsüberwachungssystems. Das Verkehrsüberwachungssystem 1 umfasst zwei Einzelgeräte, wobei das eine Einzelgerät das Messsystem 2 und das andere Einzelgerät die Anzeige- und/oder Erfassungseinheit 6 umfasst. Beide Einzelgeräte sind beabstandet zueinander jeweils am Rande einer Fahrbahn 14 mit Fahrradstreifen 15 an einem oberen Ende eines Masten angeordnet. Dabei ist ein Rand der Fahrbahn 14 durch eine Fahrbahnbegrenzungslinie 16 kenntlich gemacht. Der Fahrradstreifen 15 ist durch eine Trennlinie 17 gegenüber dem Fahrbereich für andere Fahrzeuge abgesetzt. Eine Mittellinie 18 zeigt die Mitte der Fahrbahn 14 an. Die Linien 16, 17 und 18 können prinzipiell bei der Identifikation von Objekten und/oder der Abstandsermittlung einbezogen werden.

Im vorliegenden Fall ist das Messsystem 2 durch ein Radar, beispielsweise ein FMCW-Radar gebildet. Der Erfassungsbereich 7 des Messsystems 2 ist im vorliegenden Fall im Wesentlichen durch einen Kegel mit der Fahrbahn 14 als schräge Grundfläche und dem Messsystem 2 an dessen Spitze. Der Erfassungsbereich 7 umfasst eine Ebene (der Übersichtlichkeit wegen nicht explizit dargestellt), die senkrecht zur Fahrbahn 14 und parallel zu dem Masten des Messsystems 2 angeordnet ist.

Dabei können verschiedene Objekte den Erfassungsbereich 7 passieren. Beispielhaft ist in Fig. 2 ein Überholvorgang in dem Erfassungsbereich 7 dargestellt, bei dem ein überholendes Fahrzeug 19 einen überholten Verkehrsteilnehmer 20 (ein Fahrrad) überholt. Das Messsystem 2 erfasst einen Abstand a_{A} zu dem überholenden Fahrzeug 19 sowie einen Abstand a_{F} zu dem überholten Verkehrsteilnehmer 20, wobei die Abstände jeweils relativ zu dem Messsystem 2 erfasst werden. Aus den Abständen a_{A} und a_{F} wird ein Abstand a zwischen dem überholenden Fahrzeug 19 und dem überholten Verkehrsteilnehmer 20 berechnet. Der Abstand a wird mittels eines Komparators 5 (hier nicht dargestellt) mit einem Minimalabstand 8 verglichen und abhängig von einem Vergleichsergebnis ein Triggerereignis ausgegeben. Das Triggerereignis wird funkbasiert (in Fig. 2 durch Funkwellen symbolisiert) zu der Anzeige- und/oder Erfassungseinheit 6 übertragen. Hierbei kann beispielsweise LoRa oder Bluetooth genutzt werden. Bei der Anzeige- und/oder Erfassungseinheit 6 wird - abhängig von dem Triggerereignis - eine Aktion durchgeführt, beispielweise mittels eines Lichtzeichens 9 (hier ein Display) ein farbiges Piktogramm an das überholende Fahrzeug 19 und den überholten Verkehrsteilnehmer 20 ausgegeben und/oder mittels einer Kamera 10 ein Foto von dem Überholvorgang zu Dokumentationszwecken erzeugt.

Hinsichtlich weiterer vorteilhafter Ausgestaltungen wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1: Verkehrsüberwachungssystem
- 2: Messsystem
- 3: Auswerteeinheit
- 4: Bewertungseinheit
- 5: Komparator
- 6: Anzeige- und/oder Erfassungseinheit
- 7: Erfassungsbereich
- 8: Minimalabstand
- 9: Lichtzeichen
- 10: Kamera
- 11: Speicher
- 12: Steuereinheit
- 13: Kommunikationseinheit
- 14: Fahrbahn
- 15: Fahrradstreifen
- 16: Fahrbahnbegrenzungslinie
- 17: Trennlinie
- 18: Mittellinie
- 19: Überholendes Fahrzeug
- 20: Überholter Verkehrsteilnehmer

## Patentansprüche

1. Verkehrsüberwachungssystem zum Überwachen eines Seitenabstands zwischen einem überholenden Fahrzeug (19) und einem überholten Verkehrsteilnehmer (20), umfassend:
ein Messsystem (2), das stationär und zum Erzeugen von Messwerten von bewegten Objekten in einem Erfassungsbereich (7) des Messsystems (2) ausgebildet ist,
eine Auswerteeinheit (3), die dazu ausgebildet ist, in durch das Messsystem (2) erzeugten Messwerten Objekte in dem Erfassungsbereich (7) als überholendes Fahrzeug (19) und einen überholten Verkehrsteilnehmer (20) zu identifizieren,
eine Bewertungseinheit (4), die dazu ausgebildet ist, Entfernungen (a) zwischen Objekten in dem Erfassungsbereich (7) zu ermitteln,
einen Komparator (5), der dazu ausgebildet ist, durch die Bewertungseinheit (4) ermittelte Entfernungen (a) zwischen Objekten in dem Erfassungsbereich (7) mit einem Minimalabstand (8) zu vergleichen und basierend darauf ein Triggerereignis zu erzeugen und auszugeben, und
eine Anzeige- und/oder Erfassungseinheit (6), die zum Ausführen einer Aktion basierend auf dem Triggerereignis ausgebildet ist.

2. Verkehrsüberwachungssystem nach Anspruch 1, wobei die Auswerteeinheit (3) dazu ausgebildet ist, Objekte basierend auf deren Dimension und/oder deren Position in dem Erfassungsbereich (7) zu identifizieren.

3. Verkehrsüberwachungssystem nach Anspruch 1 oder 2, wobei die Auswerteeinheit (3) auf einem KI - Künstliche Intelligenz-Ansatz basiert.

4. Verkehrsüberwachungssystem nach einem der Ansprüche 1 bis 3, wobei das Messsystem (2) eine Kamera umfasst, dessen Bild durch die Auswerteeinheit (3) beim Identifizieren von Objekten in dem Erfassungsbereich (7) nutzbar ist.

5. Verkehrsüberwachungssystem nach einem der Ansprüche 1 bis 4, wobei die Messwerte des Messsystems (2) Informationen über Entfernungen (a_{A}, a_{F}) zwischen dem Messsystem (2) und erkannten Objekten in dem Erfassungsbereich (7) umfassen und dass die Bewertungseinheit (4) dazu ausgebildet ist, die Entfernungen (a_{A}, a_{F}) zwischen Objekten in dem Erfassungsbereich (7) basierend auf Entfernungen (a) zwischen dem Messsystem (2) und erkannten Objekten in dem Erfassungsbereich (7) zu ermitteln.

6. Verkehrsüberwachungssystem nach Anspruch 5, wobei die Bewertungseinheit (4) dazu ausgebildet ist, die Entfernungen (a) zwischen Objekten in dem Erfassungsbereich (7) als Differenz von Entfernungen (a_{A}, a_{F}) zwischen dem Messsystem (2) und erkannten Objekten in dem Erfassungsbereich (7) zu ermitteln.

7. Verkehrsüberwachungssystem nach einem der Ansprüche 1 bis 6, wobei die Bewertungseinheit (4) beim Ermitteln von Entfernungen (a) zwischen Objekten in dem Erfassungsbereich dazu ausgebildet ist, Bezugspunkte und/oder Bezugslinien (17, 18, 19) in Messwerten des Messsystem (2) und/oder einen zeitlichen Verlauf innerhalb der Messwerte des Messsystem (2) zu nutzen.

8. Verkehrsüberwachungssystem nach einem der Ansprüche 1 bis 7, wobei das Messsystem (2) ein Radarsystem, eine ToF - Time of Flight - Kamera, eine Stereokamera oder ein LIDAR - Laser Imaging Detection and Ranging - System umfasst.

9. Verkehrsüberwachungssystem nach einem der Ansprüche 1 bis 8, wobei das Messsystem (2) derart relativ zu einer überwachten Fahrbahn (14) angeordnet ist, dass zumindest eine Ebene innerhalb des Erfassungsbereichs (7) des Messsystems (2) senkrecht zu der Fahrbahn (14) angeordnet ist.

10. Verkehrsüberwachungssystem nach einem der Ansprüche 1 bis 9, wobei zumindest das Messsystem (2) und die Anzeige- und/oder Erfassungseinheit (6) räumlich voneinander getrennt sind, wobei die Anzeige- und/oder Erfassungseinheit (6) das Triggerereignis empfängt, oder
dass das Messsystem (2), die Auswerteeinheit (3), die Bewertungseinheit (4), der Komparator (5) und die Anzeige- und/oder Erfassungseinheit (6) in - einem gemeinsamen Gehäuse angeordnet sind.

11. Verkehrsüberwachungssystem nach einem der Ansprüche 1 bis 10, wobei die Anzeige- und/oder Erfassungseinheit (6) zum Ausgeben von Lichtzeichen (9) basierend auf dem Triggerereignis ausgebildet ist.

12. Verkehrsüberwachungssystem nach einem der Ansprüche 1 bis 11, wobei die Anzeige- und/oder Erfassungseinheit (6) zum Erzeugen eines Fotos und/oder eines Videos mittels einer Kamera (10) basierend auf dem Triggerereignis ausgebildet ist, das einen Überholvorgang des überholten Verkehrsteilnehmers durch das überholende Fahrzeug dokumentiert.

13. Verkehrsüberwachungssystem nach einem der Ansprüche 1 bis 12, zusätzlich umfassend eine Protokolliereinheit, wobei die Protokolliereinheit kommunizierend mit dem Messsystem (2), der Auswerteeinheit (3), der Bewertungseinheit (4) und/oder dem Komparator (5) verbunden ist, wobei die Protokolliereinheit dazu ausgebildet ist, durch das Verkehrsüberwachungssystem erfasste Ereignisse abzuspeichern und/oder auszuwerten.

14. Verkehrsüberwachungssystem nach einem der Ansprüche 1 bis 13, zusätzlich umfassend eine Kommunikationseinheit (13), wobei die Kommunikationseinheit (13) zum Kommunizieren von Triggerereignissen und/oder aufgenommenen Fotos und/oder aufgenommenen Videos und/oder Messwerten an eine Leitstelle und/oder eine Protokolliereinheit ausgebildet ist.

15. Verfahren zum Überwachen eines Seitenabstands zwischen einem überholenden Fahrzeug (19) und einem überholten Verkehrsteilnehmer (20), umfassend:
Erzeugen von Messwerten mittels eines stationär angeordneten Messsystems (2), wobei die Messwerte bewegte Objekte in einem Erfassungsbereich (7) des Messsystems (2) repräsentieren,
Identifizieren von Objekten in dem Erfassungsbereich (7) als überholendes Fahrzeug (19) und einen überholten Verkehrsteilnehmer (20) basierend auf den Messwerten,
Ermitteln von Entfernungen (a) zwischen Objekten in dem Erfassungsbereich (7),
Vergleichen von ermittelten Entfernungen (a) zwischen Objekten in dem Erfassungsbereich (7) mit einem Minimalabstand (8),
Erzeugen und Ausgeben eines Triggerereignisses basierend auf dem Vergleich ermittelter Entfernungen (a) mit dem Minimalabstand (8) und
Ausführen einer Aktion durch eine Anzeige- und/oder Erfassungseinheit (6) basierend auf dem Triggerereignis.

## Claims

1. A traffic monitoring system for monitoring a lateral distance between an overtaking vehicle (19) and an overtaken road user (20), comprising:
a measurement system (2) which is stationary and designed to generate measured values of moving objects in a detection area (7) of the measurement system (2), an evaluation unit (3) which is designed to identify objects in the detection area (7) as an overtaking vehicle (19) and an overtaken road user (20) in measured values generated by the measurement system (2),
an estimation unit (4) which is designed to determine distances (a) between objects in the detection area (7),
a comparator (5) which is designed to compare distances (a) between objects in the detection area (7) determined by the estimation unit (4) with a minimum distance (8) and to generate and output a trigger event based thereon, and
a display and/or detection unit (6) which is designed to perform an action based on the trigger event.

2. The traffic monitoring system according to claim 1, wherein the evaluation unit (3) is designed to identify objects on the basis of their dimension and/or their position in the detection area (7).

3. The traffic monitoring system according to claim 1 or 2, wherein the evaluation unit (3) is based on an AI - artificial intelligence - approach.

4. The traffic monitoring system according to any one of claims 1 to 3, wherein the measurement system (2) comprises a camera, the image of which can be used by the evaluation unit (3) when identifying objects in the detection area (7).

5. The traffic monitoring system according to any one of claims 1 to 4, wherein the measured values of the measurement system (2) comprise information about distances (a_{A}, a_{F}) between the measurement system (2) and detected objects in the detection area (7), and wherein the evaluation unit (4) is designed to determine the distances (a_{A}, a_{F}) between objects in the detection area (7) on the basis of distances (a) between the measurement system (2) and detected objects in the detection area (7).

6. The traffic monitoring system according to claim 5, wherein the evaluation unit (4) is designed to determine the distances (a) between objects in the detection area (7) as the difference of distances (a_{A}, a_{F}) between the measurement system (2) and detected objects in the detection area (7).

7. The traffic monitoring system according to any one of claims 1 to 6, wherein the evaluation unit (4), when it determines the distances (a) between objects in the detection area, is designed to use reference points and/or reference lines (17, 18, 19) in measured values of the measurement system (2) and/or a time course within the measured values of the measurement system (2).

8. The traffic monitoring system according to any one of claims 1 to 7, wherein the measurement system (2) comprises a radar system, a ToF - time of flight - camera, a stereo camera or a LIDAR - laser imaging detection and ranging - system.

9. The traffic monitoring system according to any one of claims 1 to 8, wherein the measurement system (2) is arranged relative to a monitored carriageway (14) in such a way that at least one plane within the detection area (7) of the measurement system (2) is arranged perpendicular to the carriageway (14).

10. The traffic monitoring system according to any one of claims 1 to 9, wherein at least the measurement system (2) and the display and/or detection unit (6) are spatially separated from one another, wherein the display and/or detection unit (6) receives the trigger event, or the measurement system (2), the evaluation unit (3), the estimation unit (4), the comparator (5) and the display and/or detection unit (6) are arranged in a common housing.

11. The traffic monitoring system according to any one of claims 1 to 10, wherein the display and/or detection unit (6) is designed to output light characters (9) on the basis of the trigger event.

12. The traffic monitoring system according to any one of claims 1 to 11, wherein the display and/or detection unit (6) is designed to generate a photograph and/or a video by means of a camera (10) on the basis of the trigger event, which documents an overtaking procedure of the overtaken road user by the overtaking vehicle.

13. The traffic monitoring system according to any one of claims 1 to 12, additionally comprising a logging unit, wherein the logging unit is communicatively connected to the measurement system (2), the evaluation unit (3), the estimation unit (4) and/or the comparator (5), wherein the logging unit is designed to store and/or evaluate events detected by the traffic monitoring system.

14. The traffic monitoring system according to any one of claims 1 to 13, additionally comprising a communication unit (13), wherein the communication unit (13) is designed to communicate trigger events and/or recorded photos and/or recorded videos and/or measured values to a control point and/or a logging unit.

15. A method for monitoring a lateral distance between an overtaking vehicle (19) and an overtaken road user (20), comprising:
generating measured values by means of a stationary measurement system (2), wherein the measured values represent moving objects in a detection area (7) of the measurement system (2),
identifying objects in the detection area (7) as an overtaking vehicle (19) and/or an overtaken road user (20) based on the measured values,
determining distances (a) between objects in the detection area (7),
comparing determined distances (a) between objects in the detection area (7) with a minimum distance (8),
generating and outputting a trigger event based on the comparison of determined distances (a) with the minimum distance (8), and
performing an action by a display and/or detection unit (6) based on the trigger event.

## Revendications

1. Système de contrôle de la circulation destiné au contrôle d'une distance latérale entre un véhicule dépassant (19) et un usager de la circulation dépassé (20), comprenant :
un système de mesure (2), qui est constitué de façon fixe et pour produire des valeurs de mesure d'objets mobiles dans une zone de saisie (7) du système de mesure (2),
une unité d'exploitation (3), qui est constituée pour identifier dans les valeurs de mesure produites par le système de mesure (2) des objets dans la zone de saisie (7) en tant que véhicule dépassant (19) et un usager de la circulation dépassé (20),
une unité d'évaluation (4), qui est constituée pour déterminer des distances (a) entre des objets dans la zone de saisie (7),
un comparateur (5), qui est constitué pour comparer les distances (a) déterminées par l'unité d'évaluation (4) entre les objets dans la zone de saisie (7) à une distance minimale (8) et générer et délivrer un évènement déclencheur en se basant dessus, et
une unité d'affichage et/ou de saisie (6), qui est constituée pour exécuter une action en se basant sur l'évènement déclencheur.

2. Système de contrôle de la circulation selon la revendication 1, sachant que l'unité d'exploitation (3) est constituée pour identifier des objets en se basant sur leur dimension et/ou leur position dans la zone de saisie (7).

3. Système de contrôle de la circulation selon la revendication 1 ou 2, sachant que l'unité d'exploitation (3) est basée sur un élément complémentaire à intelligence artificielle (IA).

4. Système de contrôle de la circulation selon l'une quelconque des revendications 1 à 3, sachant que le système de mesure (2) comprend une caméra, dont l'image peut être utilisée par l'unité d'exploitation (3) lors de l'identification des objets dans la zone de saisie (7).

5. Système de contrôle de la circulation selon l'une quelconque des revendications 1 à 4, sachant que les valeurs de mesure du système de mesure (2) comprennent des informations relatives aux distances (aA, aF) entre le système de mesure (2) et les objets identifiés dans la zone de saisie (7) et sachant que l'unité d'évaluation (4) est constituée pour déterminer les distances (aA, aF) entre les objets dans la zone de saisie (7) en se basant sur les distances (a) entre le système de mesure (2) et les objets identifiés dans la zone de saisie (7).

6. Système de contrôle de la circulation selon la revendication 5, sachant que
l'unité d'évaluation (4) est constituée pour déterminer les distances (a) entre les objets dans la zone de saisie (7) en tant que différence des distances (aA, aF) entre le système de mesure (2) et les objets identifiés dans la zone de saisie (7).

7. Système de contrôle de la circulation selon l'une quelconque des revendications 1 à 6, sachant que l'unité d'évaluation (4) lors de la détermination des distances (a) entre les objets dans la zone de saisie est constituée pour utiliser des points de référence et/ou des lignes de référence (17, 18, 19) dans les valeurs de mesure du système de mesure (2) et/ou un profil de temps à l'intérieur des valeurs de mesure du système de mesure (2).

8. Système de contrôle de la circulation selon l'une quelconque des revendications 1 à 7, sachant que le système de mesure (2) comprend un système radar, une caméra à temps de vol (ToF), une caméra stéréo ou un système de détection et de télémétrie par la lumière (LIDAR) .

9. Système de contrôle de la circulation selon l'une quelconque des revendications 1 à 8, sachant que le système de mesure (2) est disposé par rapport à une chaussée contrôlée (14) de telle manière qu'au moins un plan à l'intérieur de la zone de saisie (7) du système de mesure (2) est disposé perpendiculairement à la chaussée (14).

10. Système de contrôle de la circulation selon l'une quelconque des revendications 1 à 9, sachant qu'au moins le système de mesure (2) et l'unité d'affichage et/ou de saisie (6) sont séparés l'un de l'autre dans l'espace, sachant que l'unité d'affichage et/ou de saisie (6) reçoit l'évènement déclencheur, ou
sachant que le système de mesure (2), l'unité d'exploitation (3), l'unité d'évaluation (4), le comparateur (5) et l'unité d'affichage et/ou de saisie (6) sont disposés dans une enceinte commune.

11. Système de contrôle de la circulation selon l'une quelconque des revendications 1 à 10, sachant que l'unité d'affichage et/ou de saisie (6) est constituée pour délivrer des signes lumineux (9) en se basant sur l'évènement déclencheur.

12. Système de contrôle de la circulation selon l'une quelconque des revendications 1 à 11, sachant que l'unité d'affichage et/ou de saisie (6) est constituée pour produire une photo et/ou une vidéo au moyen d'une caméra (10) en se basant sur l'évènement déclencheur, qui établit une opération de dépassement de l'usager de la circulation dépassé par le véhicule dépassant.

13. Système de contrôle de la circulation selon l'une quelconque des revendications 1 à 12, comprenant en plus une unité de protocole, sachant que l'unité de protocole est reliée communiquant avec le système de mesure (2), l'unité d'exploitation (3), l'unité d'évaluation (4) et/ou le comparateur (5), sachant que l'unité de protocole est constituée pour mémoriser et/ou exploiter les évènements saisis par le système de contrôle de la circulation.

14. Système de contrôle de la circulation selon l'une quelconque des revendications 1 à 13, comprenant en plus une unité de communication (13), sachant que l'unité de communication (13) est constituée pour communiquer des évènements déclencheurs et/ou des photos enregistrées et/ou des vidéos enregistrées et/ou des valeurs de mesure à un poste de commande et/ou une unité de protocole.

15. Procédé destiné au contrôle d'une distance latérale entre un véhicule dépassant (19) et un usager de la circulation dépassé (20), comprenant :
la production de valeurs de mesure au moyen d'un système de mesure (2) disposé de façon fixe, sachant que les valeurs de mesure représentent des objets déplacés dans une zone de saisie (7) du système de mesure (2),
l'identification des objets dans la zone de saisie (7) en tant que véhicule dépassant (19) et un usager de la circulation dépassé (20) en se basant sur les valeurs de mesure,
la détermination des distances (a) entre les objets dans la zone de saisie (7),
la comparaison des distances déterminées (a) entre les objets dans la zone de saisie (7) avec une distance minimale (8),
la production et la délivrance d'un évènement déclencheur en se basant sur la comparaison des distances (a) déterminées à la distance minimale (8) et
l'exécution d'une action par une unité d'affichage et/ou de saisie (6) en se basant sur l'évènement déclencheur.
